# EUROPEAN PATENT APPLICATION

(11) **EP 4 769 847 A1**
(43) Date of publication of application: **01.07.2026**
(21) Application number: 25217518.7
(22) Date of filing: 20.11.2025
(51) Int. Cl.: H01R 13/713, H01R 13/66, H02H 5/04

(54) **ELECTRICAL SAFETY DEVICE FOR FIRE PREVENTION IN PLUGS AND SOCKET OUTLETS**

(30) Priority: 26.12.2024 ES 202432393 U
(71) Applicant: Rodriguez Acedo, Raul, 45695 Alberche Del Caudillo Toledo (ES)
(72) Inventor: Rodriguez Acedo, Raul, 45695 Alberche Del Caudillo Toledo (ES)
(74) Representative: JD&P Patent Attorneys Joanna Dargiewicz & Partners

(57) **Abstract**

The device consists of a case (1) made of heat conductive material, from which two pins or electrical connectors emerge: an input pin (2) and an output pin (3), which are connected in series with a diode (4), a resistor (5) and an electric thermostat (6) which closes the circuit upon reaching a preset temperature. The input pin determines a means of connection to the live or neutral cable in the socket outlet or plug in question, while the output pin (3) determines a means of connection to the earth cable in the socket outlet or plug in question. The diode (4) establishes a single direction of flow of the current through the device to the neutral connection, which serves to prevent overheating in socket outlets and plugs, in order to avoid potential fires.

## Description

### Technical Field

This invention concerns a device specially designed to prevent overheating in plugs and socket outlets, in order to avoid potential fires.

The object of the invention is to provide a device that is highly effective, safe, structurally simple, inexpensive and easy to install, although it can also be installed during the manufacturing process of the corresponding plug or socket outlet.

The invention is therefore applicable to low-voltage installations.

### State of the Art

In terms of the practical application of the invention, both socket outlets and plugs are subject to safety standards that do not currently prevent all situations of overheating in the event of a faulty electrical connection.

As such, situations may arise where the condition of the internal connections cannot be seen by those using either single or multiple plugs and socket outlets, meaning they may end up overheating without tripping the safety switch or residual current device.

The reality is that electrical fires caused by the faulty plugs and socket outlets are more common than desired.

### Invention Description

The recommended electrical safety device for fire prevention in plugs and socket outlets completely resolves the issue outlined above, based on a simple yet highly effective solution.

Specifically, the device of the invention consists of a small case containing a diode in series with a resistor and an electric thermostat.

The electric thermostat leaves the circuit open, and is designed to close it when the case reaches a preset critical temperature of 70°C for people's safety.

The device will be installed via its two pins, live to earth and neutral to earth, in the electrical connectors of the socket or plug. This means it will preferably be used in duplicate between both pairs of cables.

When connected, the diode ensures current is flowing towards the earth in either of the two connections, while the electrical resistor serves to adjust the minimum ground current.

The device casing will of course be made of a heat conductive material and should preferably remain in contact with the insulator material of the socket outlet or plug on which it is installed.

Naturally, the electrical installation will be connected to at least one residual current device, in order to comply with the Low Voltage Regulations, normally with a sensitivity of 0.03 amps.

This means that if the socket outlet or plug overheats, the electric thermostat will close before reaching a temperature that could cause a fire. This automatically triggers a short circuit in the live to earth or neutral to earth connection, causing an electrical diversion that is detected by a residual current device, which will automatically cut off the power supply and thus prevent a potential fire.

As a result, while the plug or socket outlet remains above the preset temperature, the residual current device cannot be reset, making it an extremely safe device against electrical fires.

### Description of Figures

To complement the following description and in order to provide a better understanding of the characteristics of the invention, in accordance with a preferred example of the practical set-up, a series of drawings integral to this description is provided, intended to be illustrative and not exhaustive:
Figure 1. Shows an electrical diagram of the internal components of an electrical safety device for fire prevention in plugs and socket outlets, made in accordance with the object of this invention.
Figure 2. Shows what the device looks like when installed in a socket with a duplicate connection, i.e. live to earth and neutral to earth.
Figure 3. Finally, we see the invented device installed on a plug.

### Recommended set-up of the invention

In view of the figures shown, it can be seen that the electric safety device for fire prevention in plugs and socket outlets consists of a case (1) made of heat conductive material, from which two pins emerge that determine the electrical connections, an input pin (2) and an output pin (3), which are connected in series with a diode (4), a resistor (5) and an electric thermostat (6).

By way of example, the resistor may have a resistance level of 5000 ohms, while the electric thermostat (6) is designed to close the circuit at temperatures above 70°C.

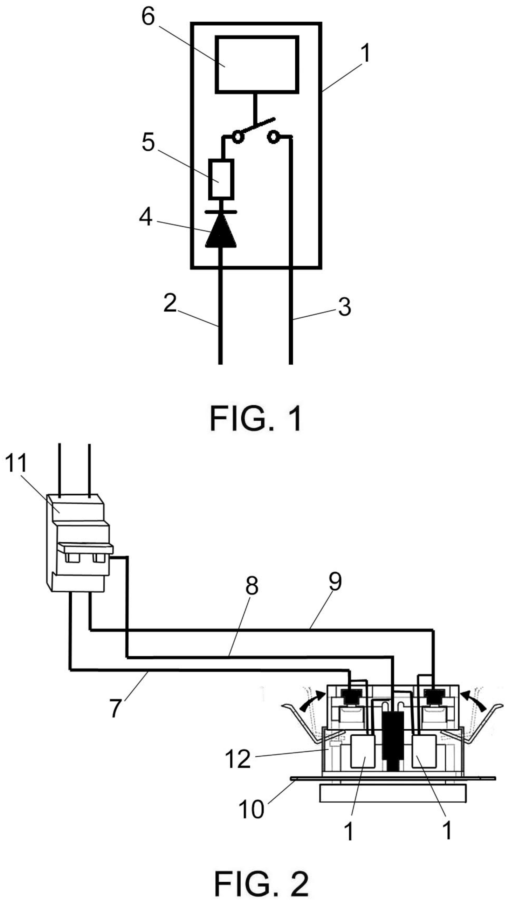

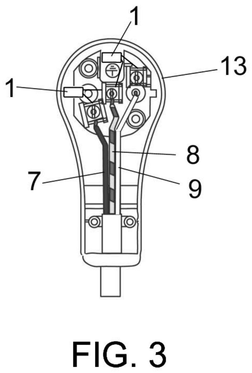

The device described will preferably be used in pairs, as shown in Figures 2 and 3, so as to connect it from live (7) to earth (8), specifically its input pin (2) connected to live (7), and its output pin (3) connected to earth (8), while a second device is connected with its input pin (2) connected to neutral (9) and its output pin (3) connected to earth (8), whether in a socket outlet (10) or on a male plug (13).

These devices, as mentioned above, are made of heat conductive material, and should therefore be touching the insulator material (12) on the socket outlet (10) or male plug (13) susceptible to catching fire, in order to prevent the insulator from reaching a temperature above 70°C.

Moreover, the governing Low Voltage Regulations stipulate that the installation must be connected to a residual current device (11), so that if the socket outlet or plug overheats due to faulty internal electrical connections, the electric thermostat (6) will automatically close the device's internal circuit from live to earth or neutral to earth, thereby diverting the current. This is automatically detected by the residual current device (11), which then automatically cuts off the power supply to prevent fire hazards.

## Claims

1. Electrical safety device for fire prevention in plugs and socket outlets, **characterised by** the fact that it consists of a case (1) made of heat conductive material, from which two pins or electrical connectors emerge, an input pin (2) and an output pin (3), which are connected in series with a diode (4), a resistor (5) and an electric thermostat (6) which closes the circuit when reaching above a preset temperature, with the expectation that the input pin determines a means of connection to the live or neutral connection of the socket outlet or plug in question, while the output pin (3) determines a means of connection to the earth cable in the socket outlet or plug in question, and the diode (4) establishes a single direction of current flow through the device towards the neutral connection.

2. Electrical safety device for fire prevention in plugs and socket outlets, according to Claim 1, **characterised by** the fact that the electric thermostat (6) is designed to close the electrical circuit at any temperature above 70°C.

3. Electrical safety device for fire prevention in plugs and socket outlets, according to Claim 1, **characterised by** the fact that the resistor has a resistance level of 5000 ohms.
